# EUROPEAN PATENT SPECIFICATION

(11) **EP 2 231 550 B1**
(45) Date of publication and mention of the grant of the patent: **23.05.2012**
(21) Application number: 07865246.8
(22) Date of filing: 05.12.2007
(51) Int. Cl.: C04B 24/40, C04B 28/02, C04B 24/04

(54) **CHROMIUM-REDUCING TRANSITION METAL CARBONYLS**
CHROMREDUZIERENDE ÜBERGANGSMETALLCARBONYLE
CARBONYLES DE MÉTAUX DE TRANSITION RÉDUCTEURS DE CHROME

(43) Date of publication of application: 29.09.2010
(73) Proprietor: W. R. Grace & Co.-Conn, Columbia, MD 21044 (US)
(72) Inventor: JARDINE, Leslie, A., Burlington MA 01803 (US); JACHIMOWICZ, Felek, Brookline MA 02445 (US)
(74) Representative: Benson, John Everett
(86) International application number: PCT/US2007/086519
(87) International publication number: WO 2009/073026

(56) References cited:
- EP-A1- 0 524 611
- WO-A-00/06517
- DE-B- 1 003 533
- DE-B3-102005 026 793
- DE-C- 508 917
- US-A- 2 140 627
- US-A- 2 514 312
- US-A1- 2005 109 243
- US-B1- 6 872 247
- "Römpp Online" [Online] April 2007 (2007-04), GEORG THIEME VERLAG , STUTTGART , XP002491955 Retrieved from the Internet: URL:http://www.roempp.com/prod/index1.html > [retrieved on 2008-08-07] " Stichwort: Carbonyl-Komplexe " the whole document
- "Römpp Online" [Online] May 2004 (2004-05), GEORG THIEME VERLAG , STUTTGART , XP002491956 Retrieved from the Internet: URL:http://www.roempp.com/prod/index1.html > [retrieved on 2008-08-11] " Stichwort: Polyethylenglycole " the whole document
- BALZAREK, C., WEAKLEY, T.J.R. & TYLER, D.R.: "Generation of 17-electron organometallic radicals in aqueous solution; chemical and electrochemical oxidation of Fe(CO)3(TPPTS)2" INORGANICA CHIMICA ACTA, vol. 315, 2001, pages 139-146, XP002491954 cited in the application
- HEALTH COUNCIL OF THE NETHERLANDS: COMMITTEE ON UPDATING OF OCCUPATIONAL EXPOSURE LIMITS: "Pentacarbonyliron (CAS reg no: 13463-40-6)" HEALTH-BASED REASSESSMENT OF ADMINISTRATIVE OCCUPATIONAL EXPOSURE LIMITS, [Online] March 2002 (2002-03), XP002491957 The Hague Retrieved from the Internet: URL:http://www.gr.nl/pdf.php?ID=259> [retrieved on 2008-08-11]

## Description

### Field of the Invention

This invention relates to compositions and methods for reducing hexavalent chromium, and more particularly to the use of transition metal carbonyls or derivatives thereof in reducing hexavalent chromium in cement, cementitious materials, and in other materials.

### Background of the Invention

Chromium is an unavoidable trace element of the raw material used in the manufacture of cement, which is interground to produce hydratable cement. In the oxidizing and alkaline burning conditions of the cement kiln, hexavalent chromium (Cr⁶⁺) may form. Hexavalent chromium has high solubility in water, and is released when cement is mixed with water. It therefore poses a health issue for workers who come into contact with wet cement or wet concrete, because it can cause skin sensitization, allergic reactions, and eczema. Hexavalent chromium is a powerful dermal irritant, which is considered extremely toxic, due to its high oxidation potential and ability to penetrate human tissue.

US2005/0109243 A1 shows a method for reducing hexavalent chromium levels in cement comprising introducing to cement clinker, before, during or after intergrinding a composition comprising solid particles of iron (II) and/or tin (II) sulfate, a viscosity modifying agent, additional chromium reducing agents, like metal salts and an anti-oxidant/oxygen scavenger. Transition metal catalyst with chloride, stearate, acetate, etc. as counterions are disclosed as optional additives.

Ferrous (iron II) sulfate and stannous (tin II) sulfate have been typically used to reduce hexavalent chromium (Cr⁶⁺) to trivalent chromium (Cr³⁺), which is less soluble and tends to precipitate from solution, thus mitigating the risk of dermal irritation. However, ferrous sulfate has poor dosage efficiency when compared to stannous sulfate, while stannous sulfate is much more expensive than ferrous sulfate.

The dosage inefficiency of ferrous sulfate is such that many times the amount of ferrous sulfate is actually required for reducing the level of hexavalent chromium in cement, compared to the amount that is required as a matter of stoichiometry. The poor dosage efficiency of ferrous sulfate is explained partly by the fact that it readily oxidizes from iron II (Fe²⁺) to iron III (Fe³⁺) when in contact with air and water. The ferrous ion is known to react rapidly with oxygen to form ferric ion under alkaline conditions. *(See e.g.,* Cotton, F. A.; Wilkinson, G., Comprehensive Inorganic Chemistry, 4th Ed, John Wiley and Sons, 1980), p 490.

The high temperature and humidity levels of cement manufacturing plants, in particular, render the ferrous sulfate highly susceptible to oxidative attack by atmospheric oxygen. Consequently, cement plant operators often use multiple times the amount of ferrous sulfate otherwise needed for reducing levels of hexavalent chromium (Cr⁶⁺). They also tend to deplete ferrous sulfate inventories quickly due to lack of storage stability, because the ferrous sulfate tends to become useless in a short period of time.

The use of ferrous sulfate has a number of disadvantages. One disadvantage is the fact that ferrous sulfate, because it contains iron, stains the concrete, and therefore is undesirable from an aesthetic viewpoint. Another disadvantage is that the dosage inefficiency and lack of storage stability of ferrous sulfate, which tend to raise the actual dosage amount of ferrous sulfate, lead to excessive dosage levels that are detrimental to cementitious systems. This is because ferrous sulfate increases the water demand of the cement, and leads to an extension of setting time. Moreover, the higher dosage of ferrous sulfate increases shipping costs, and the difficulties in handling and dispensing this material create a number of on-site storage and pumping/dispensing difficulties and other logistical complications.

In view of these concerns, novel methods and compositions are needed for reducing levels of hexavalent chromium in cementitious compositions.

### Summary of the Invention

In avoiding the disadvantages of the prior art, the present invention provides compositions and methods involving the use of a transition metal carbonyl or derivative thereof. Preferably, the transition metal or its derivative is employed in a zero or lower valent state (e.g., 0, -1, -2, etc.).

Preferred transition metal carbonyls and derivatives contemplated for use in the present invention include iron, cobalt, nickel, and manganese in a zero or lower valent state. In the case of zero valent iron (Fe(0)), the inventors believe that the iron carbonyl would work extremely well in cement, cementitous materials, and other compositions containing hexavalent chromium because this provides three electrons for reducing chromium, whereas iron (II) sulfate provides only one.

The inventors believe that the present invention allows for better storage stability and dosage efficiency compared to prior art compositions and methods for reducing chromium levels.

An exemplary method for reducing hexavalent chromium in cement, cementitious compositions, or other materials, comprises: introducing to cement, cementitious material, or other material (A) at least one transition metal carbonyl or derivative wherein the metal is in a zero valent or lower valent state; and (B) at least one other additive comprising (i) a cement additive (e.g., triethanolamine, diethylisopropanolamine, triisopropanolamine, etc.); (ii) an anti-oxidant (which term means and includes oxygen scavengers); (iii) at least one other chromium-reducing agent (e.g., ferrous sulfate, tin sulfate); (iv) a metal chelating agent; or a mixture thereof. The phrase "chromium-reducing" refers to the ability of the transition metal carbonyl or derivative thereof to reduce hexavalent chromium to trivalent chromium.

The compositions and methods of the invention may be used to treat cement (which is ground from clinker and may include fly ash and/or slag), cementitious materials (which contain cement as well as fly ash, slag, aggregates, and other materials), as well as other materials such as fly ash and slag without cement.

Preferably, the chromium-reducing transition metal carbonyl or derivative thereof is introduced into a manufacturing process wherein cement clinker is interground to produce cement powder. Optionally, the metal carbonyl or derivative thereof may be added with a conventional cement additive, chromium reducing agent (e.g., ferrous sulfate, tin sulfate), or mixture thereof. Alternatively, the metal carbonyl or derivative thereof may be incorporated into finished cement powder, such as bagged cement, or incorporated as a chemical admixture into mortar or concrete.

In preferred methods and compositions of the invention, the water solubility of the transition metal carbonyls is improved by formation of anionic carbonyl derivatives, or otherwise by forming transition metal carbonyl derivatives having an attached water-soluble hydrophilic moiety or group.

Hence, the present invention provides methods for reducing chromium and cementitious compositions produced by such methods, as well as cement additive and concrete admixture compositions containing the chromium-reducing metal carbonyls and/or derivatives thereof.

Other advantages, benefits, and features of the invention are described in further detail hereinafter.

### Detailed Description of Preferred Embodiments

The present invention employs transition metal carbonyls or derivatives thereof for reducing hexavalent chromium in cement, in a cementitious material, or in other materials. The present invention also provides methods for modifying such cement, cementitious materials, and other materials; and also provides cement and cementitious compositions comprising one or more of the transition metal carbonyls or derivatives thereof. The present invention also provides additives or admixture compositions which comprise at least one transition metal carbonyl or derivative thereof and a conventional cement additive, chromium reducing agent, antioxidant, or mixture thereof.

The term "cement" as used herein means and refers to Portland cement, which, as used in the construction trade, means a hydratable cement produced by pulverizing or intergrinding cement clinker, which consists of calcium silicates usually containing one or more of the forms of calcium sulfate, as an interground addition with ASTM types I, II, III, IV, or V (or other types such as EN197).

The term "cement," as used in the present invention, may include pozzolans, which are siliceous or aluminosiliceous materials that possess little or no cementitious value (i.e., as a binder), but which will, in finely divided form in the presence of water, chemically react with the calcium hydroxide released by the hydration of Portland cement to form materials with cementitious properties. *See e.g.,* Dodson, V., Concrete Admixtures (Van Nostrand Reinhold, New York 1990), page 159. Diatomaceous earth, limestone, clay (e.g., metakaolin), shale, fly ash, silica fume, and blast furnace slag are some of the known pozzolans. Certain ground granulated blast-furnace slag and high calcium fly ash possess both pozzolanic and cementitious properties.

The term "cementitious" materials thus includes materials containing cement and/or pozzolans, and may optionally contain aggregates as in the case of grouts and/or mortars (which contain cement and a fine aggregate such as sand) or in the case of concretes (which contain cement, fine aggregate, and coarse aggregate such as crushed stone or gravel).

Included in cementitious materials are granulated blast furnace slag (although some air-cooled slags may be deemed cementitious as well) and natural cement (e.g., ordinary Portland cement). Other cementitious materials include calcium sulfate (e.g., gypsum, plaster), aluminous cement, ceramic cement, oil well drilling cement, and others.

Thus, the transition metal carbonyl or derivative thereof may be added to fly ash or slag which is ground and later added to cement or into clinker which is interground, optionally with one or more cement additives and chromium reducers (other than the transition metal carbonyl or derivative of the present invention).

Other materials in which the Transition metal carbonyls and derivatives may be used as contemplated by the present invention, include contaminated soils, solid wastes, sludge, sand, gravel, and waste waters which contain hexavalent chromium.

In preferred methods of the invention wherein clinker and/or pozzolanic materials (slag, fly ash) are ground, it is believed that any of the known grinding mill types may be employed, including ball mills and roll (or roller) mills. Mills having rolls (such as roll press mills) can be used wherein the cement clinker (or slag or fly ash) are crushed on circular tables upon which rollers are revolved. Other types of roller mills employ two or more rollers that are nipped together, and clinker or other cement, or cementitious precursors, are crushed by dropping materials vertically between nipped rollers. Thus, the methods and compositions of the invention can be used in both ball mills and roller mills that are used for grinding precursor materials (e.g., clinker) to produce hydratable cement particles.

The transition metal carbonyl and/or derivative thereof may be combined with clinker before and/or during the manufacturing process in the grinding mill; as a so-called "cement additive"; or, alternatively, the metal carbonyl or derivative thereof may be combined with the finished cement or introduced as a so-called "admixture" into mortar or concrete. Such additives or admixtures may be in the form of a liquid solution or suspension or added in a dry powder form.

The term "carbonyl" as used herein means and refers to carbon monoxide as a ligand in an inorganic or organometallic complex (a metal carbonyl, e.g., nickel carbonyl); in this situation, carbon is triple-bonded to oxygen: C≡O.

Transition metal carbonyls are believed to be coordination complexes of transition metals with carbon monoxide. These complexes may be homoleptic, i.e., contain only CO ligands, such as nickel carbonyl (Ni(CO)₄), while other common metal carbonyls may contain a mix of CO ligands with other ligands comprising or constituting hydrophilic moieties or groups, such as Re(CO)₃(2,2'-bipyridine)Cl. The term "ligand" as used herein is intended to refer to a functional group that donates or shares electrons through a covalent bond with one or more central atoms or ions.

Nickel carbonyl and iron pentacarbonyl may be formed by treating the nickel or iron metals with carbon monoxide, but most other metal carbonyls are prepared less directly. The other homoleptic carbonyls are usually made by "reductive carbonylation" of metal salts or metal oxides under a high pressure of carbon monoxide in an autoclave (e.g., Re₂O₇ + 17 CO → Re₂(CO)₁₀ + 7 CO₂). Once prepared, the homoleptic carbonyls may undergo extensive substitution and redox reactions. Mixed hydrophilic ligands of metals such as rhodium, ruthenium, iridium, and osmium are often generated in the laboratory by abstraction from CO from solvents such as dimethylformamide (DMF) and methoxyethanol. Typical is the synthesis of IrCl(CO)(PPh₃)₂ from the reaction of iridium(III) chloride and triphenylphosphine in boiling DMF solution.

Transition metal carbonyl complexes are readily available and serve as starting materials for the preparation of many other organometallic compounds. Although simple metal carbonyl compounds are widely used as catalysts in industrial important chemical transformations including hydrogenation (HRh(CO)₄), hydroformylation (HCo(CO)₄), carboalkoxylation (Co₂(CO)₈), carbonylation of acetylenes (Ni(CO)₄, Ru₃(CO)₁₂), and Fischer-Tropsch reaction (Ir₄(CO)₁₂). The inventors believe that, until the present invention, the oxidation of transition metal carbonyls by hexavalent chromium (Cr⁶⁺) was not investigated.

Transition metal carbonyls most preferred for reducing chromium will be based on iron (Fe), cobalt (Co), nickel (Ni), and manganese (Mn). Other transition metals, such as ruthenium (Ru), rhodium (Rh), iridium (Ir) and osmium (Os), should also work but may be too expensive to be commercially feasible. Again, the transition metals are preferably used in their lowest valent state, when complexed with the carbonyl group, so that the maximum number of electrons are available for reducing hexavalent chromium.

Preferably, the transition metal carbonyl or derivative thereof has a standard potential in a reduction reaction of less than -0.13V.

Exemplary transition metal carbonyls or derivatives contemplated for use in the present invention may adhere to the so-called "18 electron rule." The present inventors believe that metal carbonyls are most stable when this 18-electron rule is satisfied. What this means is that one or more molecules of transition metals share electrons with the one or more ligands through covalent bonding, and electons contributed by the metal molecule or molecules and one or more ligands adds up to a total of 18 electrons. It is not absolutely necessary, however, that the 18-electron rule must be satisfied in all cases. For example, when one or more carbonyl groups is/are substitute by ligands, the total electrons contributed by the metal and ligands may not add up to 18.

Carbon monoxide is a considered a π (pi) acid. As such, carbon monoxide has low lying vacant orbitals of the correct symmetry to form pi bonds by accepting electrons from filled metal d-orbitals, a phenomena known as back-bonding. This ligand stabilizes lower metal oxidation states, even negative ones. *See e.g.,* Principles and Applications of Organotransition Metal Chemistry, James P. Collman and Louis S. Hegedus, Chapter 2.6 (University Science Books, Mill Valley, California 1980), pp. 31.

The present inventors believe that in preferred embodiments of the present invention, the water solubility of the transition metal carbonyl or derivative thereof should be enhanced by incorporating it into a high pH solution. This can be done by placing the transition metal carbonyl compound or derivative into the highly alkaline environment of wet cement, mortar, or concrete, or otherwise by combining the transition metal carbonyl or derivative thereof with a highly alkaline material before placing it into dry cement or cement clinker or other cementitious material. This would increase chromium-reducing efficiency and confer a benefit in terms of reduced toxicity for the construction industry in particular.

One way to increase water solubility of a transition metal carbonyl or derivative thereof is to expose it to a high pH solution (e.g., pH greater than 7 and more preferably greater than pH = 9) to achieve an anionic carbonyl derivative compound. For example, it is believed that some anionic carbonyl derivatives, such as Na[FeCp(CO)₂] (Eo = -1.74) have been used to reduce other organometallic complexes. "Cp" refers to cyclopentadienyl wherein the metal is bonded by five carbon atoms. The present inventors contemplate that iron carbonyl derivatives such as Na[HFe(CO)₄] or NaCo(CO)₄ can be synthesized in this manner and used for reducing hexavalent chromium in cement or cementitious materials (into which water is subsequently introduced) with excellent results. Fe(CO)₅ in the presence of NaOH will form Na[HFe(CO)₄]. Anionic carbonyl derivatives such as derived from the use of basic materials (e.g., other alkali or alkaline earth metal hydroxides or amines) will be water soluble at high pH, and available for reduction of soluble hexavalent chromium (Cr⁶⁺) to less-soluble trivalent chromium (Cr³⁺) in the high pH aqueous environment of fresh cement, mortar, or concrete mixes.

It is also possible to use magnesium hydroxide (Mg(OH)₂) to generate a high pH solution.

A second way to increase water-solubility of the transition metal carbonyl is to react the metal carbonyl with a hydrophilic group or moiety.

A preferred hydrophilic group or moiety comprises at least one phosphine or phenylphosphine. By using one or more such moiety or group, one may form a compound having the structural formula: Me(CO)ₓLₙ, wherein Me represents at least one transition metal molecule selected from the group consisting of iron, nickel, cobalt, and manganese; "x" represents an integer of 1 to 12 (and more preferably 4-12) and denotes the number of carbonyl ligands; "L" represents at least one water-soluble hydrophilic moiety or group, and "n" is an integer representing the number of water-soluble hydrophilic moieties or groups "L".

Along these lines, an exemplary hydrophilic moiety or group contains or incorporates a triphenylphosphine, and the resultant transition metal carbonyl compound containing or incorporating such triphenylphosphine moiety can be further modified by attachment of an ionic group. The present inventors believe the triphenylphosphine forms pi bonds with the transition metal by back-bonding. One or more CO ligands can be replaced with tertiary phosphine ligands, for example, to give Co₂(CO)₈₋ₓ(PPh₃)ₓ wherein "Ph" represents a phenyl group and "x" is an integer of 1 to 7.

Further examples of a water-soluble phosphine or phenylphosphine include Na₆[Fe(CO)₃(TPPTS)₂] wherein "TPPTS" represents triphenylphosphine trisulfonate. *See* Balzarek, C.; Weakley, T.J.R.; and Tyler, D.R.; Department of Chemistry, University of Oregon, Eugene, Oregon, Inorganica Chimica Acta (2001), 315(s), 139-146. Publisher: Elsevier Science S.A., CODEN: ICHAA3 ISSN: 0020-1693. (CAN 135:101494 AN 2001:275596 CAPLUS).

Still further exemplary metal carbonyl derivatives of the invention include at least one triphenylphosphine selected from the group consisting of Na₆[Fe(CO)₃(TPPTS)₂], [HFe(CO)₃(PPh₃)₂]⁺, and Co₂(CO)₈₋ₓ(PPh₃)ₓ, wherein "Ph" designates a phenyl group (as previously mentioned) and wherein "TPPTS" designates triphenylphosphine trisulfonate (wherein the trisulfonate group is believed by the inventors to enhance the solubility of the phosphine moiety).

Another example of a hydrophilic group or moiety is a cationic water-soluble phosphine, such as one having the formula 2-diphenyl-phosphinoethyltrimethylammonium iodide. *See* Richard T. Smith et al., Department of Chemistry, Queen's University, Kingston, Ontario, Canada. Transition Metal Chemistry (Dordrecht, Netherlands, 1981), 6(3), 197-8. CODEN: TMCHDN ISSN: 0340-4285; Journal written in English. CAN95: 169371, AN 1981:569371 CAPLUS.

A still further example of a hydrophilic moiety or ligand is a poly(alkylene oxide) polymer having repeating ethylene oxide (EO) groups. For example, the hydrophilic moiety may have anywhere from 2-20 repeating EO groups or more. The transition metal carbonyl will react easily with such hydrophilic moieties or ligands containing repeating EO groups.

A third way to increase water-solubility is to combine the transition metal carbonyl to one or more hydrophilic ligands or moieties having glycine. One such example, used for releasing carbon monoxide in biological fluids, is tricarbonylchloro(glycinato)ruthenium(II). *See e.g.,* Roberta Foresti et al., Vascular Biology Unit, Department of Surgical research, Northwick Park institute for Medical research, Harrow, UK. British Journal of Pharmacology (2004), 142(3), 453-460. Publisher: Nature Publishing Group, CODEN: BJPCBM ISSN: 007-1188. Journal written in English. CAN 141:236084, AN 2004:533076 CAPLUS.

A fourth way to increase water-solubility of transition metal carbonyls is to employ hydrophilic ligands or moieties having biological origins. For example, there are methods known for synthesizing transition metal carbonyl derivatives containing biological hydrophilic moieties or groups such as porphyrins, nucleic bases and nucleosides, aminoacids, and peptides. A. A. Loganson, "Metal Carbonyl Complexes with Hydrophilic Moiety or Groups of Biological Origin," RUSS CHEM REV, 1985, 54(3), 277-292.

From the foregoing discussion, those of ordinary skill may now understand that transition metal carbonyls and derivatives thereof may comprise a water-soluble hydrophilic moiety or group "L" which is selected from the group consisting of repeating ethylene oxide units, a glycine, a phosphine or phenylphosphine, a hydrophilic moiety or group of biological origin, or mixture thereof.

For purposes of reducing chromium in cement and cementitious materials, the transition metal carbonyls and/or their derivatives may be used in an amount of 10 to 40,000 parts per million (ppm) by weight of cementitious binder (cement and/or pozzolans); and, more preferably, in an amount of 100-10,000 ppm by weight (based on amount of the cement binder); and, most preferably, in an amount of 100-2,000 ppm by weight of cement binder. The preferred amount is, of course, dependent upon the actual levels of hexavalent chromium to be treated. Again, the coordinated transition metal compounds in which such metals are used may be in either a liquid (aqueous or non-aqueous) form, or, it may be provided in a dry particle form (e.g., dried powder or granulated) depending on application and personal preference.

Exemplary cement additive and concrete admixture compounds of the present invention comprise (A) at least one transition metal carbonyl or derivative thereof; and (B) at least one other additive comprising (i) a cement additive (e.g., triethanolamine, diethylisopropanolamine, triisopropanolamine, etc.); (ii) an anti-oxidant (which term means and includes oxygen scavengers); (iii) at least one other chromium reducing agent (e.g., ferrous sulfate, tin sulfate); (iv) a metal chelating agent; or (v) a mixture thereof.

For example, an exemplary additive or admixture composition of the invention could comprise component A and at least one additive selected from the aforesaid components B(i) - B(iv) in a ratio (A:B) of 90:10 to 10:90.

Another exemplary additive or admixture composition of the invention may comprise at least one transition metal carbonyl or derivative thereof in an amount of 15%-85% (and more preferably 40% - 80%), a cement additive (such as an alkanolamine, e.g., triethanolamine which is often used as a cement grinding aid) in an amount of 10-70%, and an anti-oxidant in an amount of 5%-50%, all percentages expressed herein based on total weight of the additive or admixture composition

The term "cement additive" refers to a composition used for modifying a cement, such as during the intergrinding of cement clinker to produce Portland cement. The term "admixture" is used to refer to a composition that is combined with the finished (Portland) cement, with or without aggregates. For example, a "mortar admixture" is one that is added to cement and fine aggregate (sand), while a "concrete admixture" is one that is added to a combination of cement, fine aggregate (sand), and coarse aggregate (crushed gravel, stones). Accordingly, the present invention also provides additive and admixture compositions, as well as cement and cementitious compositions.

Known cement additives may be used, for example, in an amount of 0.01-1.0% s/s cement, and these include, but are not limited to, tetrahydroxylethylethylene diamine ("THEED"), an alkanolamine such as triethanolamine ("TEA") or triisopropanolamine ("TIPA"), a glycol (such as diethylene glycol), or mixture thereof. THEED was described, along with similar derivatives of ethylene diamine, in French Patent Application No. FR2485949A1 as an agent for enhancing the strength of cement cured products, such as mortar and concrete, in which Portland cement, blended cement, etc., have been used.

Another exemplary additional cement additive contemplated for use in the present invention is poly(hydroxyalkylated) polyethyleneamine, poly(hydroxyethyl)polyethyleneimine, as disclosed in US Patent 4,401,472. The use of this additive in cement grinding or as admixtures in concrete, including hydraulic cement, aggregate, and water, would enhance strength. *See also* US Patent 5,084,103 (disclosing triisopropanolamine and other trialkanolamines used as strength enhancing additives for later age strength (7-28 days) in cement grinding); *See also* US Patent 6,290,772 (disclosing hydroxylamines including N,N-bis(2-hydroxyethyl)-2-propanolamine and N,N-bis(2-hydroxypropyl)-N-(hydroxyethyl)amine, to enhance compressive strength).

Other additional cement additives or admixtures can include known materials used for processing cement or modifying concretes or mortars, such as early compressive strength enhancers, grinding aids, set retarders, set accelerators, corrosion inhibiting agents, anti-foaming agents, air entraining ("AE") agents, water-reducing agents, AE/water-reducing agents, high-performance water-reducing agents (such as polycarboxylate comb polymers), high-performance AE water-reducing agents, fluidizers, agents to reduce segregation, set accelerators, anti-freezing agents, cold-resisting agents, shrink reducing agents, heat of hydration inhibitors, and alkali aggregate reaction inhibitors.

Exemplary additional cement additives may include an amine, alkanolamine, acrylic acid or salt thereof, glycol, glycerol, acetate salt, a phenol, chloride salt, sugar, or combination thereof. The amounts of such additives and/or admixtures can be used in accordance with conventional practice.

In further exemplary embodiments, the transition metal carbonyls or derivatives thereof may be combined with one or more antioxidants (including oxygen scavengers). For example, quinone compounds such as hydroquinones may be used as antioxidants. The present inventors believe that hydroquinones may be useful for improving the reducing kinetics of the metal carbonyls. Another oxygen scavengers contemplated for use in the invention includes ascorbic acid (or salt thereof), sodium sulfite, sodium bisulfite, butyl hydroxytoluene, 4-methoxyphenol, and mixtures thereof.

Antioxidants may be used in the amount of 0.0005 to 5 times the weight of the metal carbonyl or derivative thereof. The lower part of this range is particularly suitable for quinone type compounds, while the higher part of this range is believed to be more suitable for compounds such as the ascorbates, which also function as reducing agents.

Exemplary additional chromium reducing agent which can be used in the present invention, in combination with the transition metal carbonyls or their derivatives include iron and tin based compounds, such as iron (II) chloride, iron (II) sulfate, tin (II) chloride, and tin (II) sulfate, optionally in combination with metal chelating agents such as lignosulfonates, gluconates, or other agents known to form association complexes with the metal ions of such additional chromium reducing agent. This will help to stabilize the chromium reducing agent(s).

Other metal chelating agents which may be employed in the present invention, either alone with the aforementioned transition metal carbonyls and derivatives thereof, or may be employed in further combination with one or more additional additives described above, include, by way of example, nitrogen-containing moieties, such as Mohr's salt, which is ferrous ammonium sulfate (FeS0₄•(Nh₄)₂SO₄•6H₂O). Other nitrogen-containing moieties, believed to function as chelating agents by having ammonium groups that associate with metal cations, may be denoted using the formula, MeSO₄•(NH₄)₂SO₄•6H₂O, wherein Me represents a transition metal in a lower oxidation state. These include ferrous ammonium sulfate (FeSO₄•(NH₄)₂SO₄•6H₂O); nickel ammonium sulfate (NiSO₄•(NH₄)₂SO₄•6H₂O); manganese ammonium sulfate (MnSO₄•(NH₄)₂SO₄•6H₂O); cobaltous ammonium sulfate (CoSO₄•(NH₄)₂SO₄•6H2O); and copper ammonium acetate.

A preferred chelating agent comprises at least two amine groups which are spaced apart from and connected to each other by connection to or embodiment within the same molecular structure, such as in a C₂-C₃ alkyl group, or within one or more aromatic ring structures.

For example, a preferred chelating agent suitable for use in the invention is ethylenediamine metal salt, C₂H₈N₂•MeSO₄•H₂SO₄•4H₂O, wherein Me represents a chromium-reducing transition metal (in zero or lower oxidation state). Another way of representing the coordinated metal compound is Rₙ•MeX•mH₂O wherein R represents a polydentate polyamine having at least two amine groups for bonding with the same metal, "n" represents an integer of 1 to 3, Me represents a transition metal (in a lower oxidation state), and X represents an anion, and "m" represents an integer greater than or equal to zero.

Exemplary nitrogen containing molecules, which are operative to bond or associate with the same chromium-reducing metal to form exemplary coordination metal compounds useful in the present invention, may be represented by the formula ¹NR³R⁴-A-²NR¹R² wherein ¹N and ²N represent nitrogen atoms of the first and second amine groups, each having a pair of electrons for bonding or associating with the same chromium VI reducing metal. A represents a C₂ to C₃ alkyl group, and each of R¹, R² R³, and R⁴ may be selected from hydrogen, an alkyl group, -CH₂CH₂OH, acetate, and/or phophonomethyl derivatives thereof, as appropriate. For example, the nitrogen containing molecules may include N-hydroxyethylethylenediamine triacetic acid trisodium salt dehydrate or ethylene diamine tetracetic acid (EDTA) which are believed operative to bond or associate with the same chromium-reducing metal.

Preferred coordinated metal compounds are those having polydentate polyamine groups having one, two, or more aromatic ring structures that are operative to present two nitrogen bonding or association sites for the same chromium-reducing metal, particularly aromatic amines believed to form five-and six-member rings with the metal. These include, for example, 2,2'-bipyridine, in which two amine groups are spaced apart from each other because they are contained within two different aromatic rings spaced apart from and connected by a carbon-carbon bond. Another example is 1,10-phenanthroline, in which two amine groups are spaced apart from each other because they are contained within two different aromatic rings that are spaced apart by and connected by a third aromatic ring.

Exemplary amine containing coordinated metal compounds believed to be suitable for forming bonds or associations with chromium-reducing metal cations include terpyridine and diethylene triamine.

While the invention is described herein using a limited number of embodiments, these specific embodiments are not intended to limit the scope of the invention as otherwise described and claimed herein. Modification and variations from the described embodiments exist. More specifically, the following examples are given as specific illustrations of embodiments of the claimed invention. The invention is not limited to the specific details set forth in the examples. All parts and percentages in the examples, as well as in the remainder of the specification, are by weight unless otherwise specified.

Further, any range of numbers recited in the specification or claims, such as that representing a particular set of properties, units of measure, conditions, physical states or percentages, is intended to literally incorporate expressly herein by reference or otherwise, any number falling within such range, including any subset of numbers within any range so recited. For example, whenever a numerical range with a lower limit, RL, and an upper limit RU, is disclosed, any number R falling within the range is specifically disclosed. In particular, the following numbers R within the range are specifically disclosed: R = RL + k*(RU -RL), where k is a variable ranging from 1% to 100% with a 1% increment, e.g., k is 1%, 2%, 3%, 4%, 5%....50%, 51%, 52%, ...95%, 96%, 97%. 98%, 99%, or 100%. Moreover, any numerical range represented by any two values of R, as calculated above, is also specifically disclosed.

### Example 1

The following example illustrates the role of solubility in the effectiveness of the iron carbonyls to reduce hexavalent chromium. It was determined that Fe₂(CO)₉ was less soluble than Fe(CO)₅, and accordingly less effective as a chromium reducing agent.

Preliminary results on the reduction of hexavalent chromium by Fe(CO)₅ were obtained at pH 12 (standard extract reaction), and the effectiveness of the reduction process was measured after 24 hours using the ICP-OES method. In earth experiments, a respective amount of iron monocarbonyl was directly added to the extract solution via a Hamilton syringe. During experiments, it was observed that the reduction ability of Fe(CO)₅ strongly depended on the mixing intensity (magnetic stirring is required).

Reduction of hexavalent chromium by Fe(CO)₅ was performed In alkaline solution extracted from cement paste at pH 12 (ICP-OES method), and the reaction time was 24 hours during which the solution was stirred constantly. Table 2 shown below indicates the various molar ratios of iron pentacarbonyl that were added to react with chromium in solution, and also indicates the corresponding average chromate levels (indicating hexavalent chromium) after the reaction time period.

**Table 2**

| **Molar ratio (Fe(CO)₅/CrO₄²⁻)** | **Average [CrO₄²⁻] after reduction [mg/L]** |
|---|---|
| Blank cement extract | 9.5 |
| 2:1 | 6.27 |
| 4:1 | 1.78 |
| 6:1 | 0.52 |
| 8:1 | 0.005 |

Iron pentacarbonyl solubility in water and its tendency to transform into a carbonylmetallate (e.g., Na[HFe(CO)₄]) strongly depends on the pH of the solution. Hence, the highly alkaline environment (pH 13 or 14) led to an increase in solubility of the carbonyl derivative. Therefore, the standard procedure was modified, and a respective amount of Fe(CO)₅ was added as a solution in alkaline (pH 13) water (0.1g Fe(CO)₅ / 5mL H₂O). Tests were performed under analogous conditions but in a shorter time (30-40 min).

Reduction of hexavalent chromium by Fe(CO)₅ was performed in alkaline solution extracted from cement paste at pH 12 (ICP-OES method), and the reaction time was 30 minutes. The solution was stirred constantly. Table 3 shown below indicates the various molar ratios of iron pentacarbonyl that were added to react with chromium in solution, and also indicates the corresponding average chromate levels (indicating hexavalent chromium) after the reaction time period.

**Table 3**

| **Molar ratio (Fe(CO)₅/CrO₄²⁻)** | **Average [CrO₄²⁻] after reduction [mg/L]** |
|---|---|
| Blank cement extract | 9.5 |
| 4:1 | 2.23 |
| 6:1 | 1.89 |
| 8:1 | 0.79 |
| 10:1 | 0.17 |

Preliminary results based on the absorbance measurement indicated that Fe₂(CO)₉ could also reduce hexavalent chromium; however, in general, the reactions proceeded less effectively than with Fe(CO)₅.

Reduction of hexavalent chromium by Fe₂(CO)₉ was performed in alkaline solution extracted from cement paste at pH 12 (ICP-OES method), and the reaction time was 24 hours. The solution was stirred constantly. Table 4 shown below indicates the various molar ratios of Fe₂(CO)₉ that were added to react with chromium in solution, and also indicates the corresponding average chromate levels (indicating hexavalent chromium) after the reaction time period.

**Table 4**

| **Molar ratio (Fe2(CO)₉/CrO₄²⁻)** | **Average [CrO₄²⁻] after reduction [mg/L]** |
|---|---|
| Blank cement extract | 9.5 |
| 4:1 | 6.04 |
| 6:1 | 4.68 |
| 8:1 | 3.55 |
| 10:1 | 3.22 |

Next, the efficiency of hexavalent chromium reduction by Fe₂(CO)₉ after 0.5 hours was measured under similar reaction conditions.

Reduction of hexavalent chromium by Fe₂(CO)₉ was performed in alkaline solution extracted from cement paste at pH 12 (ICP-OES method), and reaction time was 30 minutes. The solution was stirred constantly. Table 5 indicates the various molar ratios of Fe₂(CO)₉ added to react with chromium in solution, and indicates corresponding average chromate levels (indicating hexavalent chromium) after the reaction time period.

**Table 5**

| **Molar ratio (Fe₂(CO)₉/CrO₄²⁻)** | **Average [CrO₄²⁻] after reduction [mg/L]** |
|---|---|
| Blank cement extract | 9.5 |
| 4:1 | 6.63 |
| 6:1 | 5.85 |
| 8:1 | 5.34 |
| 10:1 | 4.61 |

To test utility of Fe(CO)₅, the efficiency of Cr(VI) reduction after 30 minutes was measured under similar reaction conditions.

The procedure is described as follows: The respective amount of freshly prepared and intensively mixed solution of Fe(CO)₅ (0.05g) in alkaline water (4 mL, pH =13) was added to a mixture consisting of cement (20g) and distilled water (20g). The suspension was vigorously stirred for 20 minutes at room temperature. Then the cement was filtered off and cement extract was centrifuged to obtain clear sample. The concentration of hexavalent chromium was measured using ICP method.

As the ICP measurements require preparation of clear samples devoid of any solid impurities, the shortest time in which the measurement is possible is of about 30 minutes. The intense stirring of the mixture of cement- water-reducing agent required about 20 minutes, then the samples are filtered off and centrifuged if necessary, which requires another 10 minutes. As Fe(CO)₅ is soluble in the mixture of cement-water, it was assumed that reduction also took place during the sample preparation for the analysis. Taking into this account, the shortest time after which a measurement of the hexavalent chromium reduction effectiveness is estimated as 30 minutes.

Reduction of hexavalent chromium by Fe(CO)₅ was performed in alkaline solution extracted from cement paste at pH 12 (ICP-OES method), and the reaction time was 30 minutes. The solution was stirred constantly. Table 6 indicates various molar ratios of Fe₂(CO)₉ added to react with chromium in solution, and Indicates corresponding average chromate levels (indicating hexavalent chromium) after the reaction time period.

**Table 6**

| **Molar ratio (Fe(CO)₅/CrO₄²⁻)** | **Average [CrO₄²⁻] after reduction [mg/L]** |
|---|---|
| Blank cement extract | 9.5 |
| 8:1 | 3.31 |
| 10:1 | 1.72 |
| 12:1 | 1.46 |
| 16:1 | 0.58 |

## Claims

1. A method for reducing hexavalent chromium levels in cement or other hydratable, cementitious materials, comprising: introducing to a cement or other hydratable, cementitious material containing hexavalent chromium at least one transition metal carbonyl or derivative thereof, said transition metal in the at least one transition metal carbonyl or derivative thereof being in a zero or lower valent state.

2. The method of claim 1 wherein said transition metal is selected from the group consisting of iron, nickel, cobalt, manganese, and mixture thereof.

3. The method of claim 2 wherein, in said transition metal carbonyl or derivative thereof, said metal has a standard potential in a reduction reaction of less than -0.13V.

4. The method of claim 1 wherein said transition metal carbonyl or derivative thereof comprises Fe(CO)₅, Fe₂(CO)₉, Co₂(CO)₈, or mixture thereof.

5. The method of claim 1 wherein said transition metal carbonyl or derivative thereof is an anionic transition metal carbonyl derivative.

6. The method of claim 5 which additionally comprises preparing an anionic transition metal carbonyl derivative by reacting a transition metal carbonyl with a base, and introducing the derivative thus made to the cement or other hydratable, cementitious materials.

7. The method of claim 6 wherein said base is an alkali or alkaline earth metal hydroxide or an amine.

8. The method of claim 5 wherein said transition anionic metal carbonyl derivative is selected from the group consisting of Na[HFe(CO)₄] and NaCo(CO)₄.

9. The method of claim 1 wherein said transition metal carbonyl or derivative thereof has the general formula, Me(CO)ₓLₙ wherein Me represents at least one metal molecule selected from the group consisting of iron, nickel, cobalt, and manganese; "x" represents an integer of 1 to 12 and denotes the number of carbonyl ligands; "L" represents at least one water-soluble hydrophilic moiety or group selected from the group consisting of repeating ethylene oxide units, a glycine, a phosphine or phenylphosphine preferably a triphenylphosphine, a hydrophilic moiety or group of biological origin, or mixture thereof, and "n" is an integer representing the number of water-soluble hydrophilic moiety or groups "L".

10. The method of claim 9 wherein said transition metal carbonyl derivative includes a triphenylphosphine and is selected from the group consisting of Na₆[Fe(CO)₃(TPPTS)₂], [HFe(CO)₃(PPh₃)₂]⁺, and Co₂(CO)₈₋ₓ(PPh₃)ₓ, wherein "Ph" designates a phenyl group and wherein "TPPTS" designates triphenylphosphine trisulfonate.

11. The method of claim 9 wherein said hydrophilic moiety or group contains repeating ethylene oxide units.

12. A cement or cementitious composition, comprising a cement binder and a composition for reducing hexavalent chromium levels in cement or other hydratable cementitious materials, comprising: (A) at least one transition metal carbonyl or derivative thereof; said at least one transition metal in the carbonyl or derivative thereof being in a zero or lower valent state; and (B) at least one other additive comprising (i) a cement additive; (ii) an anti-oxidant; (iii) at least one other chromium reducing agent; (iv) a chelating agent; or (v) a mixture thereof.

## Patentansprüche

1. Verfahren zur Reduzierung von Mengen an sechswertigem Chrom in Zement oder anderen hydratisierbaren zementartigen Materialien, bei dem:
in einen Zement oder ein anderes hydratisierbares zementartiges Material, das sechswertiges Chrom enthält, mindestens ein Übergangsmetallcarbonyl oder ein Derivat desselben eingeführt wird, wobei das Übergangsmetall in dem mindestens einen Übergangsmetallcarbonyl oder dem Derivat desselben in einem null- oder niedrigerwertigen Zustand ist.

2. Verfahren nach Anspruch 1, bei dem das Übergangsmetall ausgewählt ist aus der Gruppe bestehend aus Eisen, Nickel, Kobalt, Mangan und Mischungen derselben.

3. Verfahren nach Anspruch 2, bei dem in dem Übergangsmetallcarbonyl oder dem Derivat desselben das Metall ein Standardpotential in einer Reduktionsreaktion von weniger als -0,13 Volt aufweist.

4. Verfahren nach Anspruch 1, bei dem das Übergangsmetallcarbonyl oder das Derivat desselben Fe(CO)5_{,} Fe₂(CO)₉, Co₂(CO)₈ oder eine Mischung derselben umfasst.

5. Verfahren nach Anspruch 1, bei dem das Übergangsmetallcarbonyl und das Derivat desselben ein anionisches Übergangsmetallcarbonylderivat ist.

6. Verfahren nach Anspruch 5, das außerdem die Herstellung eines anionischen Übergangsmetallcarbonylderivats umfasst, indem ein Übergangsmetallcarbonyl mit einer Base umgesetzt wird, und das so hergestellte Derivat Zement oder anderen hydratisierbaren, zementartigen Materialen zugesetzt wird.

7. Verfahren nach Anspruch 6, bei dem die Base ein Alkali-oder Erdalkalimetallhydroxid oder ein Amin ist.

8. Verfahren nach Anspruch 5, bei dem das anionische Übergangsmetallcarbonylderivat ausgewählt ist aus der Gruppe bestehend aus Na[HFe(CO)₄] und NaCo(CO)₄.

9. Verfahren nach Anspruch 1, bei dem das Übergangsmetallcarbonyl oder das Derivat desselben die allgemeine Formel Me(CO)ₓLₙ aufweist, in der Me mindestens ein Metallmolekül ausgewählt aus der Gruppe bestehend aus Eisen, Nickel, Kobalt und Mangan darstellt, "x" eine Zahl von 1 bis 12 darstellt und die Zahl der Carbonylliganden angibt, "L" mindestens eine(n) wasserlösliche(n), hydrophile(n) Anteil oder Gruppe ausgewählt aus der Gruppe bestehend aus sich wiederholenden Ethylenoxideinheiten, einem Glycin, einem Phosphin oder Phenylphosphin, vorzugszueise einem Triphenylphosphin, einem hydrophilen Anteil oder einer hydrophilen Gruppe biologischen Ursprungs, oder einer Mischung derselben darstellt, und "n" eine Zahl ist, die die Anzahl der wasserlöslichen, hydrophilen Anteile oder Gruppen "L" darstellt.

10. Verfahren nach Anspruch 9, bei dem das Übergangsmetallcarbonylderivat ein Triphenylphosphin einschließt und aus der Gruppe bestehend aus Na₆[Fe(CO)₃(TPPTS)₂], [HFe(CO)₃(PPh₃)₂]⁺ und Co2 (CO)₈₋ₓ- (PPh₃)ₓ ausgewählt ist, wobei "Ph" eine Phenylgruppe bezeichnet und wobei "TPPTS" Triphenylphosphintrisulfonat bezeichnet.

11. Verfahren nach Anspruch 9, bei dem der hydrophile Anteil oder die hydrophile Gruppe sich wiederholende Ethylenoxideinheiten enthält.

12. Zement oder zementartige Zusammensetzung, die Zementbindemittel und eine Zusammensetzung zur Reduzierung der Mengen an sechswertigem Chrom in Zement oder anderen hydratisierbaren, zementartigen Materialien umfasst, der/die umfasst:
(A) mindestens ein Übergangsmetallcarbonyl oder ein Derivat desselben, wobei das mindestens eine Übergangsmetall in dem Carbonyl oder dem Derivat desselben in einem null- oder niedrigerwertigen Zustand ist, und
(B) mindestens ein anderes Additiv, das (i) Zementadditiv, (ii) Antioxidants, (iii) mindestens ein anderes chromreduzierendes Mittel, (iv) Chelatisierungsmittel oder (v) eine Mischung derselben umfasst.

## Revendications

1. Procédé de réduction des teneurs en chrome hexavalent de ciments ou d'autres matériaux hydratables de type ciment, comprenant le fait d'introduire, dans un ciment ou un autre matériau hydratable de type ciment contenant du chrome hexavalent, au moins un composé métal-carbonyle de métal de transition ou un dérivé d'un tel composé, ledit métal de transition, dans ce composé métal-carbonyle de métal de transition ou dérivé d'un tel composé au nombre d'au moins un, se trouvant à un degré d'oxydation nul ou inférieur.

2. Procédé conforme à la revendication 1, dans lequel ledit métal de transition est choisi dans l'ensemble formé par les fer, nickel, cobalt et manganèse et leurs combinaisons.

3. Procédé conforme à la revendication 2, dans lequel, dans ledit métal-carbonyle de métal de transition ou dérivé d'un tel composé, ledit métal présente pour une réaction de réduction un potentiel standard inférieur à -0,13 V.

4. Procédé conforme à la revendication 1, dans lequel ledit métal-carbonyle de métal de transition ou dérivé d'un tel composé comprend un composé de formule Fe(CO)₅, Fe₂(CO)₉ ou Co₂(CO)₈, ou un mélange de ces composés.

5. Procédé conforme à la revendication 1, dans lequel ledit métal-carbonyle de métal de transition ou dérivé d'un tel composé est un dérivé anionique d'un métal-carbonyle de métal de transition.

6. Procédé conforme à la revendication 5, qui comprend en outre le fait de préparer un dérivé anionique d'un métal-carbonyle de métal de transition en faisant réagir un métal-carbonyle de métal de transition avec une base, et le fait d'introduire le dérivé ainsi préparé dans le ciment ou l'autre matériau hydratable de type ciment.

7. Procédé conforme à la revendication 6, dans lequel ladite base est un hydroxyde de métal alcalin ou alcalino-terreux ou une amine.

8. Procédé conforme à la revendication 5, pour lequel ledit dérivé anionique de métal-carbonyle de métal de transition est choisi parmi les composés de formules Na[HFe(CO)₄] et NaCo(CO)₄.

9. Procédé conforme à la revendication 1, dans lequel ledit métal-carbonyle de métal de transition ou dérivé d'un tel composé correspond à la formule générale Me(CO)ₓLₙ dans laquelle :
- Me représente au moins un atome d'un métal choisi parmi les fer, nickel, cobalt et manganèse ;
- l'indice x est un nombre entier valant de 1 à 12, qui indique le nombre de ligands carbonyle ;
- L représente au moins un groupe ou fragment hydrophile et hydrosoluble, choisi dans l'ensemble formé par des motifs répétés de type oxyéthylène, une entité de type glycine, phosphine ou phényl-phosphine, de préférence triphényl-phosphine, et un groupe ou fragment hydrophile d'origine biologique, ou une combinaison de tels groupes ou fragments ;
- et l'indice n est un nombre entier qui est le nombre de groupes ou fragments hydrophiles et hydrosolubles symbolisés par L.

10. Procédé conforme à la revendication 9, dans lequel ledit dérivé de métal-carbonyle de métal de transition comporte une triphényl-phosphine et est choisi dans l'ensemble que constituent les composés de formules Na₆[Fe(CO)₃(TPPTS)₂], [HFe(CO)₃(PPh₃)₂]⁺ et Co₂(CO)₈₋ₓ(PPh₃)ₓ, dans lesquelles Ph représente un groupe phényle et TPPTS représente un fragment triphénylphosphine-trisulfonate.

11. Procédé conforme à la revendication 9, dans lequel ledit groupe ou fragment hydrophile comporte des motifs oxyéthylène répétés.

12. Composition de ciment ou de matériau de type ciment, comprenant un liant de type ciment et une composition qui sert à réduire les teneurs en chrome hexavalent de ciments ou d'autres matériaux hydratables de type ciment et qui comprend :
A) au moins un composé métal-carbonyle de métal de transition ou un dérivé d'un tel composé, dans lequel métal-carbonyle ou dérivé au nombre d'au moins un ledit métal de transition se trouve à un degré d'oxydation nul ou inférieur ;
B) et au moins un autre adjuvant comprenant :
i) un adjuvant pour ciment,
ii) un anti-oxydant,
iii) au moins un autre agent de réduction du chrome,
iv) ou un agent chélatant,
v) ou un mélange de tels adjuvants.
